# EUROPEAN PATENT APPLICATION

(11) **EP 2 315 206 A2**
(43) Date of publication of application: **27.04.2011**
(21) Application number: 10177918.9
(22) Date of filing: 21.09.2010
(51) Int. Cl.: G11B 20/00, G11B 7/0065

(54) **Holographic disc with improved features and method for the same**

(30) Priority: 25.09.2009 US 566770
(71) Applicant: General Electric Company, Schenectady, NY 12345 (US)
(72) Inventor: Hershey, John Erik, Niskayuna, NY 12309 (US); Zinser, Richard Louis, Niskayuna, NY 12309 (US); Ross, John Anderson Fergus, Niskayuna, NY 12309 (US); Wheeler, Frederick Wilson, Niskayuna, NY 12309 (US); Wang, Xuefeng, Niskayuna, NY 12309 (US)
(74) Representative: Bedford, Grant Richard

(57) **Abstract**

An improved holographic data storage disc (10) is provided. The holographic data storage disc (10) includes multiple multimedia content (11), wherein at least one of the mutimedia is locked via one or more cryptographic keys.

## Description

The invention relates generally to holographic disc storage, and more particularly, to a holographic disc with improved features.

As computing power has advanced, computing technology has entered new application areas, such as consumer video, data archiving, document storage, imaging, and movie production, among others. These applications have provided a continuing push to develop data storage techniques that have increased storage capacity. Further, increases in storage capacity have both enabled and promoted the development of technologies that have gone far beyond the initial expectations of the developers, such as gaming, among others.

The progressively higher storage capacities for optical storage systems provide a good example of the developments in data storage technologies. The compact disc, or CD, format, developed in the early 1980s, has a capacity of around 650-700 MB of data, or around 74-80 min. of a two channel audio program. In comparison, the digital versatile disc (DVD) format, developed in the early 1990s, has a capacity of around 4.7 GB (single layer) or 8.5 GB (dual layer). The higher storage capacity of the DVD is sufficient to store full-length feature films at older video resolutions (for example, PAL at about 720 (h) x 576 (v) pixels, or NTSC at about 720 (h) x 480 (v) pixels).

However, as higher resolution video formats, such as high-definition television (HDTV) (at about 1920 (h) x 1080 (v) pixels for 1080p), have become popular, storage formats capable of holding full-length feature films recorded at these resolutions have become desirable. This has prompted the development of high-capacity recording formats, such as the Blu-ray Disc™ format, which is capable of holding about 25 GB in a single-layer disc, or 50 GB in a dual-layer disc. As resolution of video displays, and other technologies, continue to develop, storage media with ever-higher capacities will become more important. One developing storage technology that may meet the capacity requirements for some time to come is based on holographic storage.

Holographic storage is the storage of data in the form of holograms, which are images of three dimensional interference patterns created by the intersection of two beams of light in a photosensitive storage medium. Both page-based holographic techniques and bit-wise holographic techniques have been pursued. In page-based holographic data storage, a data beam which contains digitally encoded data is superposed on a reference beam within the volume of the storage medium resulting in a chemical reaction which, for example, changes or modulates the refractive index of the medium within the volume. This modulation serves to record both the intensity and phase information from the signal. Each bit is therefore generally stored as a part of the interference pattern. The hologram can later be retrieved by exposing the storage medium to the reference beam alone, which interacts with the stored holographic data to generate a reconstructed data beam proportional to the initial data beam used to store the holographic image.

In bit-wise holography or micro-holographic data storage, every bit is written as a micro-hologram, or reflection grating, typically generated by two counter propagating focused recording beams. The data is then retrieved by using a read beam to diffract off the micro-hologram to reconstruct the recording beam. Accordingly, micro-holographic data storage is more similar to current technologies than page-wise holographic storage. However, in contrast to the two layers of data storage that may be used in DVD and Blu-ray Disc™ formats, holographic discs may have 50 or 100 layers of data storage, providing data storage capacities that may be measured in terabytes (TB).

Although holographic storage systems may provide much higher storage capacities than prior optical systems, there is a possibility that multimedia is recorded with enhanced features such as, but not limited to, resolutions. All reproduction systems in the market may not be able to take advantage of the enhanced features and hence, a purchaser of the holographic disc may not be able to effectively utilize the same, resulting in no return on his purchase. Consequently, there is a need for an improved technique to provide different enhanced features using holographic disc technology. In accordance with an embodiment of the invention, a holographic data storage disc is provided. The holographic data storage disc includes multiple multimedia content, at least one of the mutimedia being locked, such as denied by encryption, via one or more cryptographic keys.

In accordance with another embodiment of the invention, a method for providing an improved holographic data storage disc is provided. The method includes providing a plurality of multimedia content, at least one of the multimedia locked via one or more cryptographic keys. The method also includes providing a decryption system to unlock the multimedia upon request of a permissible user.

Various features, aspects, and advantages of the present invention will become better understood when the following detailed description is read with reference to the accompanying drawings in which like characters represent like parts throughout the drawings, wherein:
FIG. 1 is a schematic illustration of a system for reading out from a holographic disc with improved features that utilizes cryptographic keys in accordance with an embodiment of the invention.
FIG. 2 is a block diagram representation of an embedded bit stream format allowing different reproduction quality.
FIG. 3 is a schematic illustration of the decryption system coupled to the system in FIG. 1 to provide the cryptographic keys in accordance with an embodiment of the invention.
FIG. 4 is a flow chart representing steps in an exemplary method for providing an improved holographic data storage disc in accordance with an embodiment of the invention.

As discussed in detail below, various embodiments of the invention include a holographic data storage disc with improved features and a method for providing the same. The system and method employ cryptographic keys to lock selective multimedia content on the disc. This enables recording of different types of multimedia content on a same disc, as opposed to manufacturing different discs for different multimedia content.

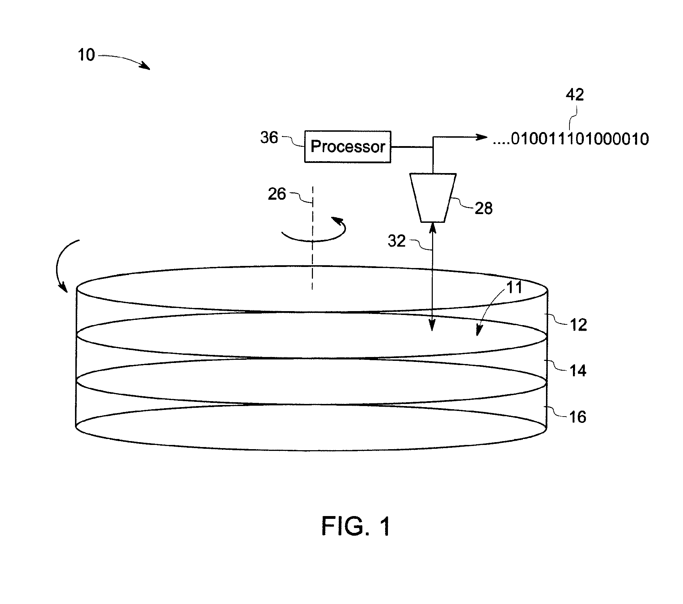

Turning to the drawings, FIG. 1 is a schematic illustration of a holographic data storage disc 10. The disc 10 includes multiple multimedia content, for example, represented by reference numeral 11, at different layers 12, 14, and 16 respectively. Although the illustrated embodiment depicts three layers in the holographic disc 10, any number of layers may be included. It should be understood that in other embodiments, the multimedia content may be stored in different configurations. In an example, location of the multimedia content is identified with respect to a particular layer in the disc 10 and to an angular position relative to an outermost track of the particular layer. Further details of data formatting can be found in co-pending U.S. Patent Application Serial Number 12/337,457 entitled "METHOD FOR FORMATTING AND READING DATA DISKS", filed on 17 December 2008 and assigned to the same assignee as this application, the entirety of which is hereby incorporated by reference herein.

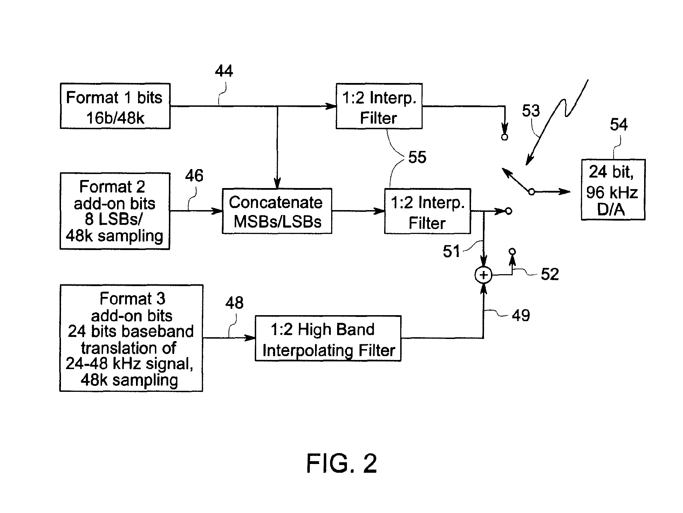

Some or all of the multimedia content in the disc 10 is locked via one or more cryptographic keys (not shown). The disc 10 rotates about a central axis 26 and an optical reader 28. The optical reader 28 emits a reading beam and receives a reflected beam, both referenced by numeral 32. Referring to FIG. 2, a processor 36 processes data from the reflected beam to output a data stream 42. Further processing of the data stream 42 includes decryption of either all, or some, or none of the symbols of the data stream 42 and is also described in FIG. 2. Metadata, present in a preamble or in a table hosted either on the disc 10 or in a table external to the disc 10 specifies portions of the data stream 42 that are encrypted with cryptographic keys. The cryptographic keys are used to decrypt respective portions of the data stream 42.

In one embodiment, the cryptographic keys are disposed on the disc in a physically isolated and locatable position, such that a number of cryptographic keys are placed on the disc 10 during a primary manufacture process, and then selectively destroyed or erased at a later period of time. This would allow uniform manufacturing of the discs that contain keys needed to decrypt a large set of versions of media on the disc 10. Such discs may also be selectively downgraded to create a variety of unique products by destroying or erasing select keys. In another embodiment, the cryptographic keys are present in an external medium or are downloaded over a communication channel upon a validated request. As used herein, cryptographic keys refer to secret quantities that set up or configure a cryptosystem for use.

It should be noted that embodiments of the invention are not limited to any particular processor for performing the processing tasks of embodiments of the invention. The term "processor," as that term is used herein, is intended to denote any machine capable of performing the calculations, or computations, necessary to perform the tasks. The term "processor" is intended to denote any machine that is capable of accepting a structured input and of processing the input in accordance with prescribed rules to produce an output. It should also be noted that the phrase "configured to" as used herein means that the processor is equipped with a combination of hardware and software for performing the tasks, as will be understood by those skilled in the art.

The multimedia content may include a variety of possibilities. In a particular embodiment, the multimedia content includes different resolutions of the multimedia content that may be unlocked by cryptographic keys. In another embodiment, the multimedia content includes embedded codes of audio or video content. In yet another embodiment, the multimedia content includes upgradable features that have one or more movies that require the one or more cryptographic keys for viewing, and having corresponding trailers of the movies unlocked. In another embodiment, multimedia content includes different versions of a video game, wherein a lower version is unlocked and a higher version is locked. In another exemplary embodiment, the multimedia content includes different versions of movies that may be played in specific regions.

In one embodiment, the multimedia content includes one or more versions of movies played without a commercial or a trailer or a preview. In another embodiment, the multimedia content includes multimedia having different digital rights management system or policy. In another embodiment the multimedia content includes versions with speech in different spoken languages, such as English, Spanish, and French, each of which may be enabled with the appropriate cryptographic key. In one embodiment, the multimedia content includes varying time sensitive information. In another embodiment, the multimedia content includes sets or menus of the cryptographic keys that require to be unlocked. In another embodiment, the multimedia content are 'prizes'. In an example, a key may be released on a certain date and the discs 10 that match the key are entitled for the 'prize'. In another exemplary embodiment, the multimedia content includes multimedia with different time schedule for release of a corresponding cryptographic key. In another embodiment, two or more keys across a party of users may be needed before new content is released. For example, in multiplayer games, new content may be a new magic power, a new tool or a new land to explore.

One exemplary embodiment of the multimedia content includes media in an embedded bit stream format with multiple hierarchical encrypted bit streams. An embedded bit stream format allows progressive increases in reproduction quality of multimedia in proportion to the overall bit rate. An embedded bit stream format is based upon a core bit stream that represents its lowest possible transmission rate. Additional hierarchical secondary bit streams may be decoded and the results combined with the decoded core bits to produce higher quality reproduction/s. Each secondary stream carries information that is not available in the lower hierarchy streams. In an example, the embedded bit stream includes three different formats of reproduction quality. A first format is a standard audio compact disc (CD) quality i.e. 16 bit, 48 kHz, while a second format is a super CD quality i.e. 24 bits, 48 kHz and a third format is a high definition quality i.e. 24 bits, 96 kHz. This is illustrated in FIG. 2. An upper signal processing path 44 reproduces a standard CD quality signal, while a middle path 46 reproduces a super CD quality. A lower signal processing path 48 adds the additional bandwidth provided by a 96 kHz sampling rate, and an output 49 of the path 48 is added to output 51 of the middle path 46 to produce a high definition output signal 52. A switch 53 selects the playback format that is sent to a D/A converter 54, and is controlled by a decryption key in use.

The architecture depicted in FIG. 2 functions with a single 24-bit, 96 kHz D/A converter to play back all three formats in this embodiment. This is enabled by 1:2 interpolating filters 55 and the encoding of the upper band signal (24-48 kHz) as a 2^{nd} Nyquist zone signal with a 48 kHz sampling rate. 1:2 interpolating filters 55 include a zero-fill up sampler (the original sample stream is doubled in sampling rate by adding a zero-valued sample between each original one), followed by a half-band lowpass or highpass filter. The output of these filters can be fed directly to the 96 kHz D/A converter 54.

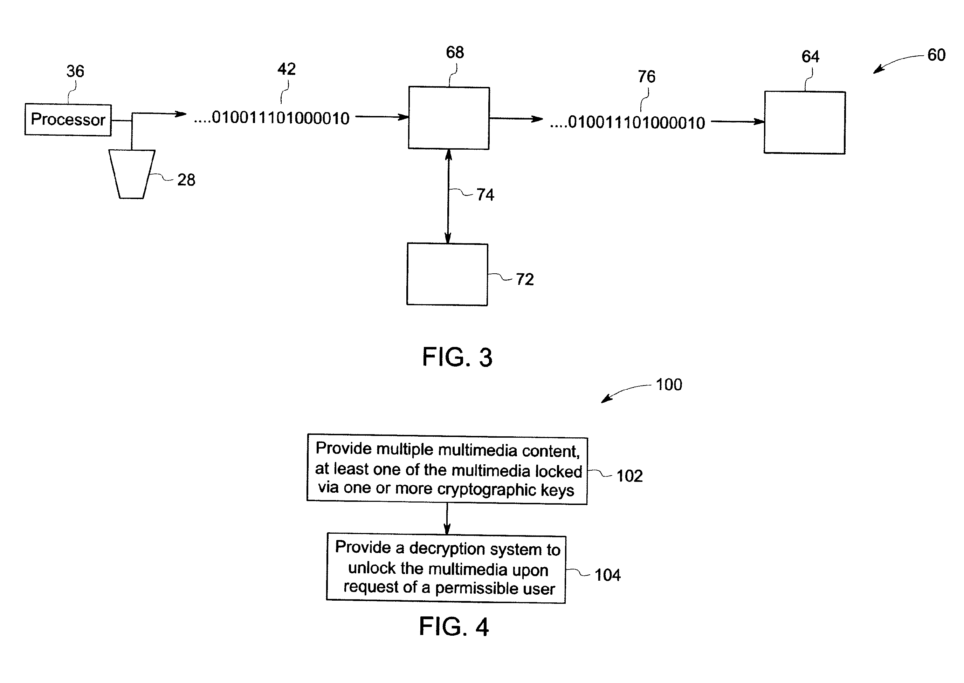

FIG. 3 is a schematic illustration of a system 60 to decrypt encrypted portion/s of the data stream 42 and present to a media presentation device 64. The processor 36 (FIG. 1) transmits encrypted data stream 42 (FIG. 1) to an output formatter 68. The output formatter 68 receives the data stream 42 and decrypts specified portions of the data stream 42 via a decryption facility 72. The decryption is performed using standard decryption algorithms such as, by way of example and not limitation, the Advanced Encryption Standard (AES). The output formatter 68 formats a decrypted data stream 74 to output a formatted data stream 76. The formatted data stream 76 that includes multimedia content data that was originally encrypted, and now decrypted, is presented to the media presentation device 64. In an example, the media presentation device 64 is a disc player.

Injection moldable thermo-plastic based disc materials may be utilized in discs for holographic data storage. Similar to conventional CD/DVD, the disc may spin relatively fast in the optical media player at hundreds or thousands of revolutions per minute (rpm) in a real-time recording and readout system. Vibration and wobble of the disc may be typically up to 100 µm, which is larger than a typical micro-hologram size (e.g., < 10 µm). Therefore, tracks on the disc may be employed to enable real-time tracking and focusing. In general, threshold response is desirable from the materials for multi-layer holographic storage. Threshold materials may include dye-doped thermo-plastics, block-copolymers, energy transfer material, and so on. Further details on threshold materials for bit-wise holographic data storage, may be found in U.S. Patent No. 7,388,695, assigned to the same assignee as the application, and incorporated herein by reference in its entirety.

FIG. 4 is a flow chart representing steps in a method 100 for providing an improved holographic data disc. The method 100 includes providing multiple multimedia content, wherein at least one of the multimedia is locked via one or more cryptographic keys in step 102. In a particular embodiment, different resolutions of the multimedia content are provided. In another embodiment, one or more movies are provided that require one or more cryptographic keys for viewing and having corresponding trailers of the movies unlocked. In yet another embodiment, different versions of movies are provided that may be played in specific regions. In one embodiment, the cryptographic keys are disposed on the disc. In another embodiment, the cryptographic keys are presented in an external medium. In another exemplary embodiment, the cryptographic keys are downloaded over a communication channel. In a particular embodiment, providing the multimedia content includes providing 'prizes', wherein cryptographic key will be released on a certain date and those disks that match the key will release the prize. In an example, fans of a certain band may be really happy they received a version with free live recordings or previously unreleased songs. In case of only one disc with that key, it may become a collectors' item. In another embodiment, for massively parallel games, on certain dates certain disks would release certain information/tools that would aid the owners of such discs, which may encourage players to buy multiple discs. In an example, keying variables are only released after a certain activity has been performed or, paid for additionally.

In one embodiment, providing multimedia content includes using one or more cryptographic keys to decrypt versions of the specific recorded media without commercials or trailers or previews. In another embodiment, cryptographic keys on the holographic disc are placed in a physically isolated and locatable position so that a number of cryptographic keys may be placed on the disk during the primary manufacture process, and then selectively destroyed or erased later. Such a scheme would allow the uniform manufacture of discs that contain keys needed to decrypt a large set of versions of the media on the disc. These discs could further be selectively downgraded to create a variety of unique products by destroying or erasing select keys. In another embodiment, one or more cryptographic keys may be used to decrypt versions of the specific recorded media that have different digital rights management systems or policies, or no digital rights management system at all. In yet another embodiment, one or more cryptographic keys may be used to decrypt versions of the specific recorded media that are playable without requiring a trusted path or a trusted computing system. In an exemplary embodiment, one or more cryptographic keys may be used to decrypt portions of the specific recorded media over a period of time and on a schedule by releasing the keys on a schedule. In another exemplary embodiment, one or more cryptographic keys may be used to unlock sets or menus of keys.

A decryption system to unlock the multimedia upon request of a permissible user is provided in step 104. In one embodiment, an output formatter is provided that receives, decrypts and formats a data stream output from the disc for presentation to a media presentation device.

The various embodiments of a holographic disc with improved features and method for the same described above thus provide a way to provide different multimedia content on one holographic disc. The system and method enable uniform manufacturing as the existing manufacturing process may be employed for production of the discs, including other optional multimedia content. Subsequently, these techniques provide a cost effective means to a manufacturer, distributor and marketing chain, since a separate accounting, advertising and handling procedures would have been required in case of additional discs been used for accommodating different multimedia content. The techniques and system also enable providing a customer with pay-for-upgraded service and like while maintaining the same manufacturing process.

Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

Furthermore, the skilled artisan will recognize the interchangeability of various features from different embodiments. For example, a disc including different versions of a video game described with respect to one embodiment can be adapted for use with accessing one or more cryptographic keys from an external medium described with respect to another. Similarly, the various features described, as well as other known equivalents for each feature, can be mixed and matched by one of ordinary skill in this art to construct additional systems and techniques in accordance with principles of this disclosure.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A holographic data storage disc comprising a plurality of multimedia content , at least one of the mutimedia being locked via one or more cryptographic keys.
2. The disc of clause 1, wherein said multimedia content comprise different resolutions of the multimedia content.
3. The disc of any preceding clause, wherein said multimedia content comprise audio or video in an embedded bitstream format and different layers are assigned different cryptographic keys.
4. The disc of any preceding clause, wherein said plurality of multimedia content comprise upgradable features that comprise one or more movies that require said one or more cryptographic keys for viewing, and corresponding trailers of the movies unlocked.
5. The disc of any preceding clause, wherein said plurality of multimedia content comprises different versions of a video game.
6. The disc of any preceding clause, wherein said plurality of multimedia content comprises different versions of movies that may be played in specific regions.
7. The disc of any preceding clause, wherein said plurality of multimedia content comprises one or more versions of movies played without a commercial or a trailer or a preview.
8. The disc of any preceding clause, wherein said plurality of multimedia content comprises multimedia having different digital rights management system or policy.
9. The disc of any preceding clause, wherein the one or more cryptographic keys are written directly on the disc in a physically isolated and locatable position.
10. The disc of any preceding clause, wherein the one or more cryptographic keys are present in an external medium or are downloaded over a communication channel upon a validated request.
11. The disc of any preceding clause, wherein said plurality of multimedia content comprises multimedia with varying time sensitive information.
12. The disc of any preceding clause, wherein said plurality of multimedia content comprises menus of keys.
13. The disc of any preceding clause, wherein said plurality of multimedia content comprises multimedia with different time schedule for release of a corresponding cryptographic key.
14. The disc of any preceding clause, wherein said plurality of multimedia content comprises multimedia with an embedded audio coder configured to reproduce a plurality of audio formats.
15. A method for providing an improved holographic data storage disc, the method comprising:
   providing a plurality of multimedia content, at least one of the multimedia locked via one or more cryptographic keys; and
   providing a decryption system to unlock the multimedia upon request of a permissible user.
16. The method of any preceding clause, wherein said providing a plurality of multimedia content comprises providing different resolutions of the multimedia content.
17. The method of any preceding clause, said providing a plurality of multimedia content compries providing one or more movies that require said one or more cryptographic keys for viewing, and corresponding trailers of the movies unlocked.
18. The method of any preceding clause, wherein said providing a plurality of multimedia content comprises providing different versions of a video game.
19. The method of any preceding clause, wherein said providing a plurality of multimedia content comprises providing different versions of movies that may be played in specific regions.
20. The method of any preceding clause, wherein said providing a plurality of multimedia content comprises at least one of disposing the one or more cryptographic keys on the disc or presenting in an external medium or donwloading over a communication channel.
21. The method of any preceding clause, said providing a decryption system comprises providing an ouput formatter to receive, decrypt and format a data stream output from the disc for presentation to a media presentation device.

## Claims

1. A holographic data storage disc (10) comprising a plurality of multimedia content (11), at least one of the mutimedia (11) being locked via one or more cryptographic keys.

2. The disc (10) of claim 1, wherein said multimedia content (11) comprise different resolutions of the multimedia content.

3. The disc (10) of any preceding claim, wherein said multimedia content (11) comprise audio or video in an embedded bitstream format and different layers (12, 14, 16) are assigned different cryptographic keys.

4. The disc (10) of any preceding claim, wherein said plurality of multimedia content (11) comprise upgradable features that comprise one or more movies that require said one or more cryptographic keys for viewing, and corresponding trailers of the movies unlocked.

5. The disc (10) of any preceding claim, wherein said plurality of multimedia content (11) comprises different versions of a video game.

6. The disc (10) of any preceding claim, wherein said plurality of multimedia content (11) comprises different versions of movies that may be played in specific regions.

7. A method (100) for providing an improved holographic data storage disc, the method comprising:
providing (102) a plurality of multimedia content, at least one of the multimedia locked via one or more cryptographic keys; and
providing (104) a decryption system to unlock the multimedia upon request of a permissible user.

8. The method (100) of claim 7, wherein said providing a plurality of multimedia content comprises providing different resolutions of the multimedia content.

9. The method (100) of claim 7 or claim 8, said providing a plurality of multimedia content compries providing one or more movies that require said one or more cryptographic keys for viewing, and corresponding trailers of the movies unlocked.

10. The method (100) of any of claims 7 to 9, wherein said providing a plurality of multimedia content comprises at least one of disposing the one or more cryptographic keys on the disc or presenting in an external medium or donwloading over a communication channel.
